# EUROPEAN PATENT SPECIFICATION

(11) **EP 0 515 326 B1**
(45) Date of publication and mention of the grant of the patent: **03.05.1995**
(21) Application number: 92830236.3
(22) Date of filing: 19.05.1992
(51) Int. Cl.: F01M 11/04, F01M 11/06, F01M 11/12, G01F 23/00

(54) **A device for automatically topping up the lubricating oil in internal combustion engines**
Einrichtung zur automatischen Nachfüllung von Schmieröl in Brennkraftmaschinen
Dispositif de remplissage automatique de l'huile dans des moteurs à combustion interne

(30) Priority: 23.05.1991 IT TO910382
(43) Date of publication of application: 25.11.1992
(73) Proprietor: IVECO FIAT S.p.A., 10156 Torino (IT)
(72) Inventor: Gellhaus, Raimund, I-10122 Torino (IT); Moretti, Mauro, I-12070 Castelnuovo di Ceva (Cuneo) (IT)
(74) Representative: Bosotti, Luciano

(56) References cited:
- EP-A- 0 416 688
- DE-A- 3 540 806
- US-A- 3 670 765
- US-A- 4 265 262
- US-A- 4 491 103
- PATENT ABSTRACTS OF JAPAN vol. 8, no. 50 (M-281)(1487) 7 March 1984 & JP-A-58 204 908 (MATSUSHITA DENKO) 29 November 1983
- PATENT ABSTRACTS OF JAPAN vol. 11, no. 258 (M-618)(2705) 21 August 1987 & JP-A-62 063 109 (TOKYO GYOGYO GIKEN) 19 March 1987
- PATENT ABSTRACTS OF JAPAN vol. 8, no. 284 (M-348)(1721) 26 December 1984 & JP-A-59 150 915 (HONDA GIKEN KOGYO) 29 August 1984

## Description

The present invention relates to a device for automatically topping up the lubricating oil in the engine of a vehicle, particularly a commercial vehicle, of the type indicated in the preamble of Claim 1.

In known devices, the level-sensor means include an intermediate constant-level tank which is normally fixed to the sump of the engine, the sump containing at least one level sensor with a float for operating a valve in the pipe between the oil reservoir and the sump to enable the supply of lubricating oil by gravity when the level of oil in the sump falls below a predetermined value. These devices are not wholly reliable both because they use level sensors with floats (which have moving parts that may jam accidentally) and because the effectiveness of the supply of oil by gravity is often affected by any impurities present in the supply pipes.
Document EP-A-0 416 688 discloses an oil level regulator comprising an electronic control device which is programmed to check the oil level before the engine is started. A remote controllable gear pump can convey a predetermined quantity of topping-up oil to the engine sump if a level detector signals a low oil level to the electronic control device.

The object of the present invention is to provide a device of the type specified at the beginning of the description, which does not have the aforesaid disadvantages and which operates safely and reliably under all operating conditions of the vehicle.
According to the invention, this object is achieved by a device of the known type, characterised by the features set forth in the characterising portion of Claim 1.

The device includes safety means for its deactivation when a predetermined maximum oil level is exceeded, and preferably the level-sensor means include first and second level sensors in the sump for monitoring the minimum and maximum levels, respectively.

By virtue of these characteristics, the device according to the invention supplies a predetermined quantity of lubricating oil, for example, by means of a positive-displacement pump, when the minimum oil level is reached in the sump so as to ensure that the lubrication system of the engine operates correctly until the next automatic top-up. The "forced" supply of the lubricating oil to the engine sump overcomes the problems resulting from the gravity supply of the prior art. Moreover, the level sensors in the sump which are, for example, of the hot wire or inductive type, overcome the mechanical disadvantages of the level sensors with floats used in the devices of the prior art.

In order to prevent the accidental supply of oil from the reservoir to the engine when the oil level falls temporarily, for example, because of jolting of the vehicle or for other reasons, the electronic control circuit preferably includes a pulse generator for generating pulses separated by predetermined periods of time, counter means which are connected to the level-sensor means and are adapted to increase their count by one unit each time the level-sensor means supply a signal corresponding to an oil level below a predetermined value during the period between two pulses of the generator, and comparator and control means for supplying a command signal for the supply of oil to the sump of the engine when the count reached by the counter means equals or exceeds a predetermined threshold value within a predetermined time period.

The electronic circuit is preferably connected to a sensor for sensing the inclination and/or acceleration of the vehicle and temporarily preventing counting when a predetermined inclination or acceleration of the vehicle is exceeded.

By virtue of these further characteristics, the oil-supply pump is activated only when the oil level is constantly below the predetermined minimum value.

Further advantages and characteristics of the device according to the invention will become clear from the following detailed description provided purely by way of non-limiting example, with reference to the appended drawings, in which:

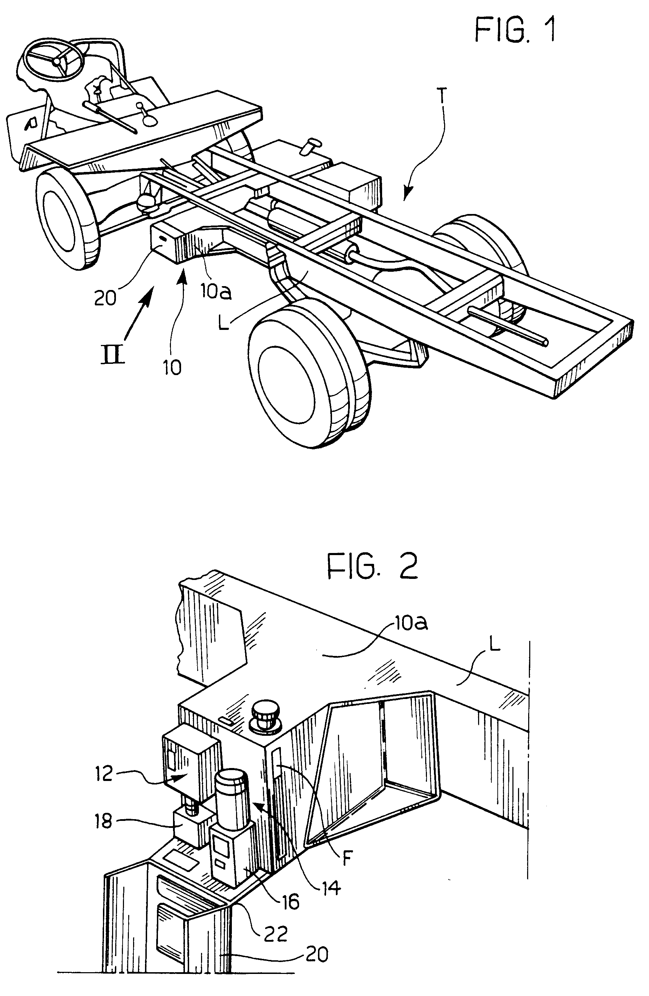

Figure 1 is a perspective view of the structure of a commercial vehicle with an automatic topping-up device according to the invention,
Figure 2 is a perspective view of a detail of Figure 1,
Figure 3 is a diagram of the electrical and hydraulic connections of the device according to the invention,
Figure 4 is a diagram showing the operation of a component shown in Figure 3,
Figures 5-6 are graphs of the signals transmitted from the level sensors to the counters of the electronic circuit of the device according to the invention, as functions of time,
Figure 7 is a graph of the count-preventing signal which is supplied to the counter by the inclination and/or acceleration sensor, as a function of time, and
Figures 8-9 are graphs of the values stored progressively in the counters associated with the sensors of Figures 5 and 6 respectively, as functions of time.

With reference to the drawings, an automatic device, generally indicated 10, for topping up lubricating oil is fixed to a side member L of the chassis T of a commercial vehicle. The device 10 includes a reservoir 10a which is made, for example, of transparent plastics material or has a transparent inspection window F, and in front of which are an electronic control unit enclosed in a casing 12, an electric pump 14 which is connected to a pipe for supplying oil to the sump of the engine with the interposition of a normally-closed solenoid valve 16, and an inclination and/or acceleration sensor 18, all enclosed by a cover 20 which is hinged to the structure of the reservoir 10a at 22.

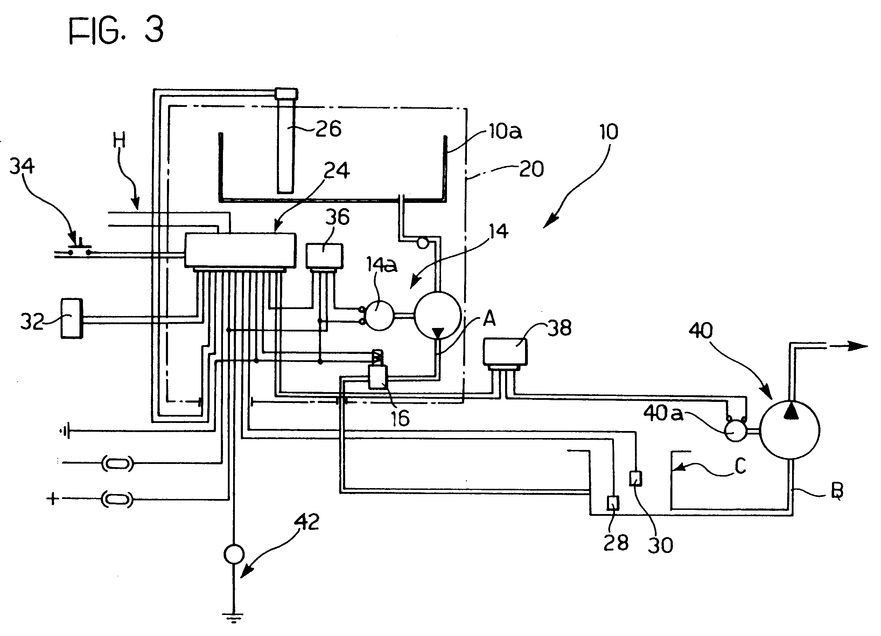

With particular reference to Figure 3, the electronic control circuit of the device 10 provides for the use of a microprocessor 24 or, alternatively, conventional components such as counters, digital comparators, etc. The microprocessor 24, the structure and functions of which will be described below, is connected to a minimum-level sensor 26 in the reservoir 10a, first and second level sensors 28 and 30 housed in the engine sump C, a sensor 32 for sensing the inclination and acceleration of the vehicle, and a manual switch 34 for draining used oil from the sump C. The microprocessor 24 controls, through a relay 36, an electric motor 14a of the electric pump 14 which is inserted in the supply pipe A between the reservoir 10a and the engine sump C. The microprocessor 24 also controls the solenoid valve 16 which is fitted in the pipe A downstream of the pump 14b, a second relay 38 for operating the electric motor 40a of an auxiliary electric pump 40 inserted in a drain pipe B for draining the used oil, and an optical indicator 42 on the dashboard of the vehicle. To advantage, the microprocessor 24 is also connected at H to a device for monitoring the operating parameters of the vehicle (a trip computer) with a display, also on the dashboard of the vehicle.

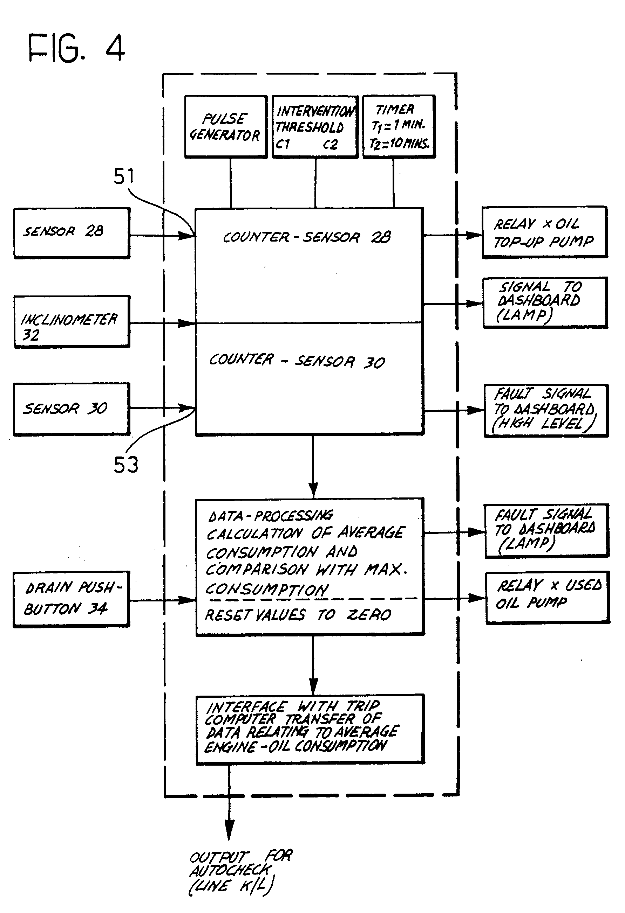

Figure 4 shows schematically the main functions of the microprocessor 24; it has a first counter which is dedicated to the minimum-level sensor 28 and has a count input 51 connected the sensor 28. Similarly, a second counter dedicated to the maximum-level sensor 30 has a count input 53 connected thereto. Both counters have count-enabling inputs connected to a pulse generator and are connected to respective comparators in which two intervention threshold values are stored for comparison with the counts at the end of a predetermined counting period T₂.

The automatic device according to the invention operates in the following manner so as to maintain a constant optimum level of the lubricating oil in the sump C. The pulse generator of the microprocessor 24 sends a periodic signal to the enabling inputs of the two counters. If, during a period of the signal, a level sensor 28 or 30 signals, for example, a value 1 (low oil level; high oil level) to the count input of its counter, the counter increases its count by one unit. If the level sensors 28 and 30 signal values 0 (corresponding to an oil level in the optimum range), the counters remain inactive. The count is stopped temporarily if a count-preventing signal is sent to the counters from the inclination/acceleration sensor 32. The counting continues for a period T₂, after which the counters are reset and the counting starts again from zero. If the values transmitted from each counter to its comparator exceed the predetermined intervention threshold values, in the case of the counter associated with the minimum-level sensor 28, the microprocessor 24 operates the relay 14a to operate the electric pump 14 for a predetermined time T₁ and, in the case of the counter associated with the maximum-level sensor 30, the microprocessor 24 deactivates the device 10 and emits a warning signal.

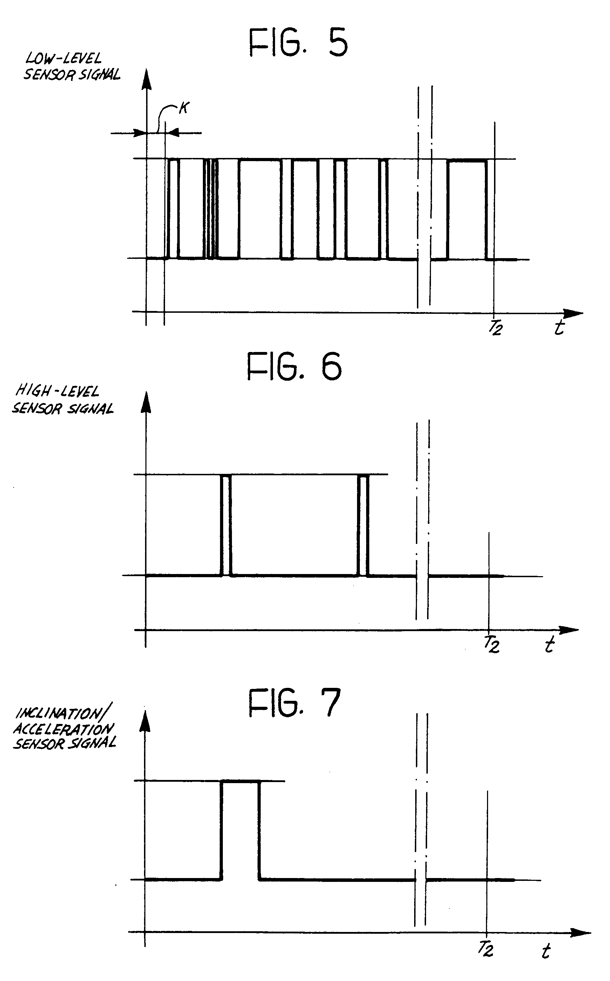

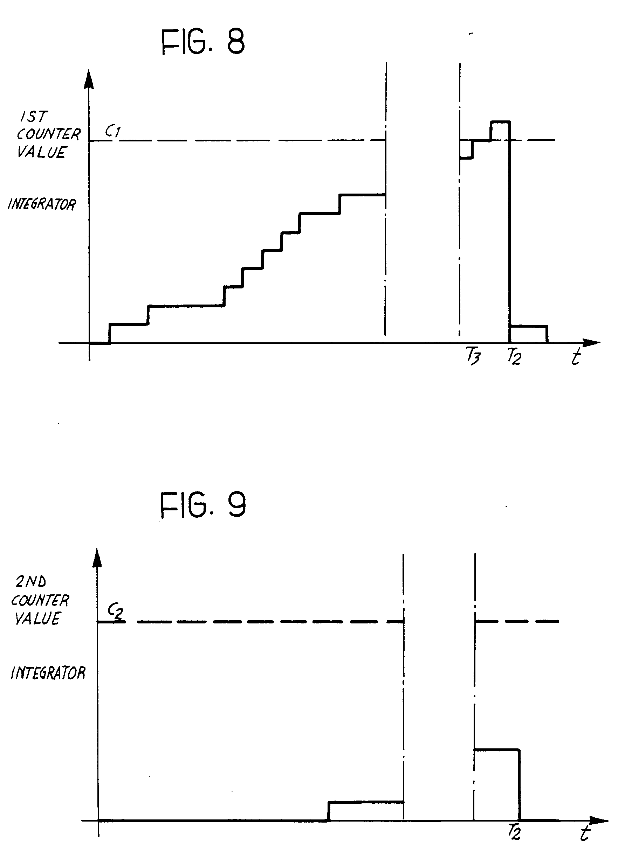

The operation of the electric pump 14 is indicated to the driver of the vehicle, for example, by the lighting of the optical indicator 42. The quantity of oil supplied from the reservoir 10a to the sump C of the engine depends upon the type of engine and, since the flow-rate of the pump 14b is known, depends solely upon the time T₁. The conditions for the intervention of the electric pump 14 are shown in the graphs of Figures 5, 7 and 8 in which the period of the pulse generator is indicated K and the threshold value of the first counter is indicated C₁. In particular, Figure 5 shows the input signals to the counter, Figure 7 shows the signal supplied to the microprocessor 24 by the inclination/acceleration sensor 32 (for example, as a result of the braking of the vehicle), and Figure 8 shows the count which equals the predetermined threshold value C₁ at the time T₃.

Figures 6 and 9 show a normal operating condition in which the second counter does not reach the threshold value C₂ within the time period T₂ (the oil is below the maximum permitted level).

The oil can thus be topped up with the use of the microprocessor 24 in association with the level sensor 28 when the level in the sump is low, with the engine either running or stopped. The microprocessor 24 can also store the number of periods T₂ elapsing between two or more successive top-ups. Since the flow-rate of the electric pump 14 and the time T₁ for which it operates are known, the microprocessor 24 can calculate the average oil consumption and compare it with a predetermined stored value which depends upon the type of engine. If this comparison reveals that the consumption exceeds the maximum predetermined value, the microprocessor 24 indicates to the driver that the oil consumption is excessive (the automatic top-ups are too frequent because of leakage of oil from the engine, broken pipes, etc.). As well as being used for comparison with a theoretical consumption value, the average oil-consumption value may be transmitted by a serial interface to a device for monitoring the operating parameters of the vehicle (a trip computer) with a display on the dashboard. This may serve for the planning of maintenance operations on the engine when a predetermined oil consumption is exceeded.

The device 10 also enables the used oil to be drained from the engine sump C without the need to remove the plug from the sump. It is, in fact, sufficient to operate manually the switch 34 which operates the auxiliary electric pump 40 by means of the microprocessor 24 and the relay 38; the use of a second pump is advisable in order to prevent dirt from entering the supply pipe A. When the used oil is drained, the timer of the microprocessor 24, which calculates the average consumption of engine oil, is automatically zeroed.

The microprocessor 24 also has a logic system for automatically checking the device 10 and sending a corresponding signal to the optical indicator or display 42. When the engine is started (and periodically whilst the vehicle is running) a self-diagnosis (an autocheck) is carried out to check whether the signals are appropriate and the individual components are connected correctly (if an anomaly is found in the system, a fault signal is sent to the optical indicator on the dashboard). The optical indicator also operates if the sensor 26 indicates a low oil level in the reservoir 10a.

Naturally, it is intended that, the principle of the invention remaining the same, the details of construction and forms of embodiment may be varied widely with respect to those described and illustrated in the drawings

For example, the device may, to advantage, have a system for automatically checking the effectiveness of the level sensors in the engine sump, the system supplying a warning signal in the event of damage to one or both sensors.

## Claims

1. A device (10) for automatically topping up the lubricating oil in the engine of a vehicle, particularly a commercial vehicle, of the type including a lubricating-oil reservoir (10a) connected to the sump (C) of the engine, minimum level-sensors means (28), an electronic control circuit (24) for receiving signals from the minimum level-sensor means (28) and supplying a predetermined quantity of oil from the reservoir (10a) to the sump (C) when the minimum sensor means (28) indicate a low oil level, characterised in that the oil is topped up automatically as well as the engine is running as well as the engine is stopped, safety means being provided for de-activating the device (10) when a predetermined maximum oil level measured by a maximum level-sensor means (30) is exceeded.

2. A device according to Claim 1, characterised in that the level-sensor means (28, 30) are associated with the sump (C) for monitoring the minimum and maximum levels, respectively.

3. A device according to any one of the preceding claims, characterised in that the electronic control circuit (24) includes:
- a pulse generator for generating pulses separated by predetermined periods of time (K),
- counter means which are connected to the level-sensor means (28) and are adapted to increase their count by one unit each time the level-sensor means (28) supply a signal corresponding to the condition in which the oil level is below a predetermined value during the period between two pulses of the generator, and
- comparator and control means for supplying a command signal for the supply of oil to the sump (C) of the engine when the count reached by the counter means equals or exceeds a predetermined threshold value (C₁) within a predetermined time period (T₂).

4. A device according to Claim 3, characterised in that the electronic control circuit (24) includes:
- auxiliary counter means which are connected to the level-sensor means (30) and are adapted to increase their count by one unit each time the level-sensor means (30) supply a signal corresponding to the condition in which the oil level exceeds a predetermined value during the period between two pulses of the generator, and
- comparator and warning means for supplying a warning signal and deactivating the device (10) when the count reached by the auxiliary counter means equals or exceeds a predetermined threshold value (C₂) within a predetermined time period (T₂).

5. A device according to Claim 3 or Claim 4, characterised in that a sensor (32) for sensing the inclination and/or acceleration of the vehicle is connected to the electronic circuit (24) for temporarily preventing counting when a predetermined inclination or acceleration of the vehicle is exceeded.

6. A device according to any one of the preceding claims, characterised in that the electronic circuit (24) includes a first memory which is supplied periodically with a signal indicative of the quantity of oil supplied to the engine from the reservoir (10a) within a predetermined period of time, a second memory which stores a signal indicative of the maximum permissible oil consumption within the said period of time, and a comparator for comparing the two memories and supplying a warning signal when the value in the second memory exceeds the value in the first.

7. A device according to Claim 3 and Claim 6, characterised in that the signal supplied periodically to the first memory corresponds to the sum of the counting periods (T₂) between two, or more top-ups of engine oil.

8. A device according to Claim 6 or Claim 7, characterised in that the electronic circuit (24) is interfaced with a system for monitoring operating parameters of the vehicle in order to display its average consumption of lubricating oil.

9. A device according to any one of the preceding claims, characterised in that a supply pump (14) and a solenoid valve (16) controlled by the electronic circuit (24) are interposed between the reservoir (10a) and the engine.

10. A device according to Claim 9, characterised in that it includes an auxiliary pump (40) for draining the used oil from the sump (C) when a manual switch (34) is operated.

11. A device according to any one of the preceding claims, characterised in that the electronic circuit (24) includes an auxiliary autochecking circuit and is connected to a display for indicating the operative state of the device (10) to the driver.

12. A device according to any one of the preceding claims, characterised in that the lubricating-oil reservoir (10a) is fixed to a member (L) of the chassis (T) of the vehicle.

## Patentansprüche

1. Vorrichtung (10) zur automatischen Nachfüllung von Schmieröl im Motor eines Fahrzeugs, insbesondere eines Nutzfahrzeugs, mit einem mit der Ölwanne (C) des Motors verbundenen Schmierölbehälter (10a), einer Minimalölstand-Sensoreinrichtung (28), einer elektronischen Steuerschaltung (24), die von der Minimalölstand-Sensoreinrichtung (28) Signale erhält und, wenn die Minimalölstand-Sensoreinrichtung (28) einen niedrigen Ölstand anzeigt, eine vorgegebene Menge Öl aus dem Behälter (10a) in die Ölwanne (C) leitet,
dadurch gekennzeichnet,
daß das Öl sowohl bei laufendem als auch bei nicht laufendem Motor automatisch nachgefüllt wird und eine Sicherheitseinrichtung vorgesehen ist, die die Vorrichtung (10) abschaltet, wenn ein vorgegebener Maximalölstand, der von einer Maximalölstand-Sensoreinrichtung (30) gemessen wird, überschritten wird.

2. Vorrichtung nach Anspruch 1, dadurch gekennzeichnet, daß die Ölstand-Sensoreinrichtungen (28, 30) zur Feststellung des Minimalölstands bzw. des Maximalölstands in der Ölwanne (C) angebracht sind.

3. Vorrichtung nach einem der vorhergehenden Ansprüche, dadurch gekennzeichnet, daß die elektronische Steuerschaltung (24) umfaßt
- einen Impulsgenerator zur Erzeugung von Impulsen mit vorgegebenen Zeitintervallen (K),
- eine Zähleinrichtung, die mit der Ölstand-Sensoreinrichtung (28) verbunden und so ausgebildet ist, daß sie immer dann ihren Zählwert um eine Einheit erhöht, wenn die Ölstand-Sensoreinrichtung (28) ein Signal liefert, das dem Zustand entspricht, in dem der Ölstand während des Zeitintervalls zwischen zwei Impulsen des Generators einen vorgegebenen Wert unterschreitet, sowie
- eine Vergleichs- und Steuereinrichtung, die ein Befehlssignal für die Zufuhr von Öl zur Ölwanne (C) des Motors liefert, wenn der von der Zähleinrichtung erreichte Zählwert innnerhalb eines vorgegebenen Zeitintervalls (T₂) einen vorgegebenen Schwellenwert (C₁) erreicht oder überschreitet.

4. Vorrichtung nach Anspruch 3, dadurch gekennzeichnet, daß die elektronische Steuerschaltung (24) umfaßt
- eine zusätzliche Zähleinrichtung, die mit der Ölstand-Sensoreinrichtung (30) verbunden und so ausgebildet ist, daß sie immer dann ihren Zählwert um eine Einheit erhöht, wenn die Ölstand-Sensoreinrichtung (30) ein Signal liefert, das dem Zustand entspricht, in dem der Ölstand während des Zeitintervalls zwischen zwei Impulsen des Generators einen vorgegebenen Wert überschreitet, sowie
- eine Vergleichs- und Warneinrichtung, die ein Warnsignal liefert und die Vorrichtung (10) ausschaltet, wenn der von der zusätzlichen Zähleinrichtung erreichte Zählwert innerhalb eines vorgegebenen Zeitintervalls (T₂) einen vorgegebenen Schwellenwert (C₂) erreicht oder überschreitet.

5. Vorrichtung nach Anspruch 3 oder 4, dadurch gekennzeichnet, daß ein Sensor (32) zur Erfassung der Neigung und/oder Beschleunigung des Fahrzeugs mit der elektronischen Steuerschaltung (24) verbunden ist, um den Zählvorgang zeitweise zu verhindern, wenn eine vorgegebene Neigung oder Beschleunigung des Fahrzeugs überschritten wird.

6. Vorrichtung nach einem der vorhergehenden Ansprüche, dadurch gekennzeichnet, daß die elektronische Steuerschaltung (24) einen ersten Speicher umfaßt, dem periodisch ein Signal zugeführt wird, das die Ölmenge anzeigt, die in einem vorgegebenen Zeitintervall aus dem Behälter (10a) zum Motor geleitet wird, einen zweiten Speicher, der ein Signal speichert, das den maximal zulässigen Ölverbrauch in diesem vorgegebenen Zeitintervall anzeigt, sowie einen Komparator, der die beiden Speicher vergleicht und, wenn der Wert im zweiten Speicher den Wert im ersten Speicher überschreitet, ein Warnsignal liefert.

7. Vorrichtung nach Anspruch 3 und 6, dadurch gekennzeichnet, daß das Signal, das dem ersten Speicher periodisch zugeführt wird, der Summe der Zählintervalle (T₂) zwischen zwei oder mehreren Nachfüllungen von Motoröl entspricht.

8. Vorrichtung nach Anspruch 6 oder 7, dadurch gekennzeichnet, daß die elektronische Steuerschaltung (24) zur Anzeige des durchschnittlichen Verbrauchs an Schmieröl eine Schnittstelle zu einem System zur Überwachung von Betriebsparametern des Fahrzeugs aufweist.

9. Vorrichtung nach einem der vorhergehenden Ansprüche, dadurch gekennzeichnet, daß zwischen dem Behälter (10a) und dem Motor eine Nachfüllpumpe (14) und ein Magnetventil (16), die von der elektronischen Steuerschaltung (24) gesteuert werden, angeordnet sind.

10. Vorrichtung nach Anspruch 9, dadurch gekennzeichnet, daß sie eine Zusatzpumpe (40) umfaßt, die bei Betätigung eines Handschalters (34) das Altöl aus der Ölwanne (C) abpumpt.

11. Vorrichtung nach einem der vorhergehenden Ansprüche, dadurch gekennzeichnet, daß die elektronische Steuerschaltung (24) zusätzlich eine Eigendiagnose-Schaltung umfaßt und mit einer Anzeige verbunden ist, die dem Fahrer den Betriebszustand der Vorrichtung (10) anzeigt.

12. Vorrichtung nach einem der vorhergehenden Ansprüche, dadurch gekennzeichnet, daß der Schmierölbehälter (10a) an einem Träger (L) des Fahrgestells (T) des Fahrzeugs befestigt ist.

## Revendications

1. Dispositif (10) de remplissage automatique de l'huile dans les moteurs à combustion interne destinés aux véhicules, notamment à usage commercial, du type comportant un réservoir d'huile (10a) relié au carter d'huile (C) du moteur, des moyens de détection de niveau minimum (28), un circuit de commande électronique (24) recevant les signaux des moyens de détection de niveau minimum (28) et envoyant une quantité prédéterminée d'huile du réservoir (10a) vers le carter (C) lorsque les moyens de détection de minimum (28) indiquent que le niveau d'huile est bas, caractérisé en ce que le remplissage d'huile s'effectue automatiquement, que le moteur soit en marche ou arrêté, des moyens de sécurité désactivant le dispositif (10) lorsqu'un niveau d'huile maximum prédéterminé, mesuré par des moyens de détection de niveau maximum (30), est dépassé.

2. Dispositif selon la revendication 1, caractérisé en ce que les moyens de détection de niveau (28, 30) sont associés au carter (C) afin de contrôler les niveaux minimum et maximum, respectivement.

3. Dispositif selon l'une quelconque des revendications précédentes, caractérisé en ce que le circuit électronique de commande (24) comprend :
- un générateur d'impulsions délivrant des impulsions séparées par des périodes de temps prédéterminées (K),
- des moyens de comptage reliés aux moyens de détection de niveau (28) et conçus de telle sorte que leur total s'incrémente d'une unité chaque fois que les moyens de détection de niveau (28) délivrent un signal correspondant à l'état dans lequel le niveau d'huile est inférieur à une valeur prédéterminée pendant la période de temps séparant deux impulsions du générateur, et
- des moyens de comparaison et d'asservissement délivrant un signal de commande d'alimentation en huile du carter (C) du moteur lorsque le total atteint par les moyens de comptage est supérieur ou égal à une valeur seuil prédéterminée (C1) pendant une période de temps prédéterminée (T2).

4. Dispositif selon la revendication 3, caractérisé en ce que le circuit de commande électronique (24) comprend :
- des moyens de comptage auxiliaires reliés aux moyens de détection de niveau (30) conçus de telle sorte que leur total s'incrémente d'une unité chaque fois que les moyens de détection de niveau (30) délivrent un signal correspondant à l'état dans lequel le niveau d'huile est supérieur à une valeur prédéterminée pendant la période de temps séparant deux impulsions du générateur, et
- des moyens de comparaison et d'avertisseur délivrant un signal d'alerte et désactivant le dispositif (10) lorsque le total atteint par les moyens de comptage auxiliaires est supérieur ou égal à une valeur seuil prédéterminée (C2) pendant une période de temps prédéterminée (T2).

5. Dispositif selon la revendication 3 ou la revendication 4, caractérisé en ce qu'un capteur (32) de détection de l'inclinaison et/ou de l'accélération du véhicule est relié au circuit électronique (24) afin d'empêcher momentanément le comptage lorsqu'une valeur prédéterminée d'inclinaison ou d'accélération du véhicule est dépassée.

6. Dispositif selon l'une quelconque des revendications précédentes, caractérisé en ce que le circuit électronique (24) comprend une première mémoire qui reçoit périodiquement un signal indiquant la quantité d'huile fournie au moteur à partir du réservoir (10a) pendant une période de temps prédéterminée, une seconde mémoire qui stocke un signal indiquant la consommation d'huile maximum admissible pendant cette même période, et un comparateur qui compare les deux mémoires et délivre un signal d'alerte lorsque la valeur de la seconde mémoire est supérieure à celle de la première.

7. Dispositif selon la revendication 3 et la revendication 6, caractérisé en ce que le signal envoyé périodiquement dans la première mémoire correspond à la somme des périodes de comptage (T2) entre deux remplissages ou plus d'huile moteur.

8. Dispositif selon la revendication 6 ou la revendication 7, caractérisé en ce que le circuit électronique (24) est interfacé avec un système de contrôle des paramètres de fonctionnement du véhicule afin d'afficher sa consommation d'huile moyenne.

9. Dispositif selon l'une quelconque des revendications précédentes, caractérisé en ce qu'une pompe d'alimentation (14) et une électrovanne (16) commandées par le circuit électronique (24) sont intercalées entre le réservoir (10a) et le moteur.

10. Dispositif selon la Revendication 9, caractérisé en ce qu'il comprend une pompe auxiliaire (40) de vidange de l'huile usagée du carter (C) lorsqu'un interrupteur manuel (34) est actionné.

11. Dispositif selon l'une quelconque des revendications précédentes, caractérisé en ce que le circuit électronique (24) comprend un circuit auxiliaire d'auto-contrôle et est relié à un afficheur indiquant l'état de fonctionnement du dispositif (10) au conducteur.

12. Dispositif selon l'une quelconque des revendications précédentes, caractérisé en ce que le réservoir d'huile (10a) est fixé sur un longeron (L) du châssis (T) du véhicule.
